# EUROPÄISCHE PATENTANMELDUNG

(11) **EP 2 466 709 A1**
(43) Veröffentlichungstag der Anmeldung: **20.06.2012**
(21) Anmeldenummer: 11184466.8
(22) Anmeldetag: 10.10.2011
(51) Int. Cl.: H02H 1/00

(54) **Schaltungsanordnung und Verfahren zum Detektieren eines Lichtbogens**

(30) Priorität: 17.12.2010 DE 102010063421
(71) Anmelder: SIEMENS AKTIENGESELLSCHAFT, 80333 München (DE)
(72) Erfinder: Hueber, Alexander, 84085 Niederleierndorf (DE); Martel, Jean-Mary, 93105 Tegernheim (DE)

(57) **Zusammenfassung**

Lichtbögen im Strombereich zwischen 1 A und 500 A sollen sicherer erkannt werden. Daher betrifft die Erfindung eine Schaltungsanordnung (10) zum Detektieren eines Lichtbogens in einem ersten Stromkreis (12) mit einem zweiten Stromkreis (18), der an den ersten Stromkreis (12) koppelbar ist, so dass durch den Lichtbogen in den zweiten Stromkreis (18) ein Signal erzeugbar ist, einem ersten Verstärker (26) in dem zweiten Stromkreis (18), wobei der ersten Verstärker (26) einen ersten Verstärkungsfaktor aufweist, mindestens einem zweiten Verstärker (28) in dem zweiten Stromkreis (18), wobei der zweite Verstärker (28) einen gegenüber dem ersten höheren, zweiten Verstärkungsfaktor aufweist und parallel zu dem ersten Verstärker (26) angeordnet ist, so dass das Signal mittels des ersten und des zweiten Verstärkers (26, 28) verstärkbar ist, einer Auswerteeinheit (24) in dem zweiten Stromkreis (18) zur Auswertung eines ersten Ausgangssignals des ersten Verstärkers (26) und eines zweiten Ausgangssignals des zweiten Verstärkers (28), wobei bei Überschreiten eines oberen Grenzwerts der Stromstärke des zweiten Ausgangssignals das erste Ausgangssignal von der Auswerteeinheit (34) zum Detektieren des Lichtbogens ausgewertet wird. Darüber hinaus betrifft die Erfindung ein Verfahren zum Detektieren eines Lichtbogens mittels einer solchen Schaltungsanordnung.

## Beschreibung

Die Erfindung betrifft eine Schaltungsanordnung zum Detektieren eines Lichtbogens gemäß dem Oberbegriff des Patentanspruchs 1. Über dies betrifft die Erfindung ein Verfahren zum Detektieren eines Lichtbogens gemäß dem Oberbegriff des Patentanspruchs 9.

Bei einem Lichtbogen handelt es sich um eine Gasentladung, welche beispielsweise zwischen Kabeln oder Leitern in einem Wechselspannungsnetz, welche eine ausreichend hohe Potentialdifferenz zueinander aufweisen, entstehen kann. Dieser Lichtbogen kann beispielsweise durch eine beschädigte Isolierung der Kabel bzw. Leitungen entstehen. Infolge des Lichtbogens entsteht eine thermische Belastung, welche die Kabel oder die Leitungen zerstören kann oder im schlimmsten Fall zu einem Brand führen kann.

Einerseits können diese Lichtbögen in Reihe zum Verbraucher auftreten. In diesem Fall ist der Lichtbogenstrom immer kleiner als der Laststrom, die Amplitude des Lichtbogenstroms beträgt in diesem Fall einigen Ampere. Andererseits kann ein Lichtbogen auch zwischen Phase und Nullleiter auftreten, wobei in diesem Fall die Amplitude des Lichtbogenstroms mehrere Hundert Ampere betragen kann. Um die Gefahren, welche infolge eines Lichtbogens auftreten können zu reduzieren, muss ein Lichtbogen zunächst zuverlässig detektiert werden, damit beim Auftreten eines Lichtbogens ein entsprechender Schutzschalter ausgelöst werden kann.

Aus der DE 20 2004 020 402 U1 ist eine Vorrichtung zur Erkennung von Störlichtbögen als bekannt zu entnehmen. Diese Vorrichtung dient insbesondere der Erkennung von Störlichtbögen an Bordnetzkabeln, wobei mittels eines Steuerbausteins, in dem verschiedene Algorithmen hinterlegt sind, die Entscheidung über das Auslösen eines Schutzschalters getroffen wird.

Als nachteilig an einer derartigen Vorrichtung zur Erkennung von Störlichtbögen ist der Umstand zu betrachten, dass bei dieser Vorrichtung der Lichtbogen mittels komplexer Algorithmen erkannt bzw. detektiert wird. Zudem ist diese Vorrichtung auf eine maximale Stromstärke von 100 A beschränkt. Die Stromstärken, welche in Hausinstallationssystemen bei Lichtbögen üblicherweise auftreten, können von einem Ampere bis zu 500 A betragen.

Aufgabe der vorliegenden Erfindung ist es daher, eine Schaltungsanordnung sowie ein Verfahren zum Detektieren eines Lichtbogens der eingangs genannten Art zu schaffen, mittels welchen ein Lichtbogen besonders einfach und mit einer hohen Genauigkeit über den kompletten Messbereich detektiert werden kann.

Diese Aufgabe wird erfindungsgemäß durch eine Schaltungsanordnung mit den Merkmalen des Patentanspruchs 1 sowie durch ein Verfahren zum Detektieren eines Lichtbogens mit den Merkmalen des Patentanspruchs 9 gelöst. Vorteilhafte Ausgestaltungen mit zweckmäßigen und nicht-trivialen Weiterbildungen der Erfindung sind in den abhängigen Patentansprüchen angegeben.

Um eine Schaltungsanordnung und ein Verfahren der eingangs genannten Art zu schaffen, mittels welchen ein Lichtbogen in einem ersten Stromkreis besonders einfach und mit einer hohen Messgenauigkeit detektiert werden kann, ist es erfindungsgemäß vorgesehen, dass die Schaltungsanordnung einen zweiten Stromkreis umfasst, der an den ersten Stromkreis koppelbar ist, so dass durch den Lichtbogen in dem zweiten Stromkreis ein Signal erzeugbar ist. Der zweite Stromkreis umfasst einen ersten Verstärker, wobei der erste Verstärker einen ersten Verstärkungsfaktor aufweist und mindestens einen zweiten Verstärker, wobei der zweite Verstärker einen gegenüber dem ersten höheren, zweiten Verstärkungsfaktor aufweist und parallel zu dem ersten Verstärker angeordnet ist, so dass das Signal mittels des ersten und des zweiten Verstärkers verstärkbar ist. Zudem umfasst der zweite Stromkreis eine Auswerteeinheit zur Auswertung eines ersten Ausgangssignals des ersten Verstärkers und eines zweiten Ausgangssignals des zweiten Verstärkers, wobei bei Überschreiten eines oberen Grenzwerts der Stromstärke des zweiten Ausgangssignals das erste Ausgangssignal von der Auswerteeinheit zum Detektieren des Lichtbogens ausgewertet wird. Mit anderen Worten ist es vorgesehen, dass das Signal, das durch den Lichtbogen in dem zweiten Stromkreis erzeugt wird, durch die jeweiligen Verstärker in mindestens zwei Messbereiche unterteilt wird. Somit wird auf einfache Weise eine hohe Messgenauigkeit über den kompletten Messbereich ermöglicht und der Lichtbogen kann zuverlässig detektiert werden.

In weiterer vorteilhafter Ausgestaltung der Erfindung ist es dabei vorgesehen, dass der Lichtbogen durch den zeitlichen Verlauf der Stromstärke des ersten Ausgangssignals und/oder des zweiten Ausgangssignals mittels der Auswerteeinheit nachweisbar ist. Infolge eines Lichtbogens entsteht ein typischer zeitlicher Verlauf der Stromstärke, der sich beispielsweise deutlich von dem sinusförmigen Verlauf eines Wechselstromsignals unterscheidet. Bevor der Lichtbogen zündet, steigt zunächst die elektrische Spannung an. Während dieser Zeit fließt kein Strom und somit ist die Amplitude der elektrischen Stromstärke Null. Nach dem Zünden des Lichtbogens steigt die elektrische Stromstärke steil an. Diese typischen Merkmale im zeitliche Verlauf der elektrischen Stromstärke sind ebenso beim Erlöschen des Lichtbogens zu erkennen. Somit kann beispielsweise zum Detektieren eines Lichtbogens zum einen die Zeit, während der der Strom nach bzw. vor dem Nulldurchgang den Wert Null besitzt, verwendet werden. Zum anderen kann die Flankensteilheit des zeitlichen Verlaufs der elektrischen Stromstärke ausgewertet werden. Um eine zuverlässige Detektion eines Lichtbogens zu garantieren, muss einerseits eine hohe Messgenauigkeit und zum anderen eine hohe zeitliche Auflösung gewährleistet werden.

Des Weiteren ist es vorgesehen, dass beim Unterschreiten eines unteren Grenzwerts der Stromstärke des ersten Ausgangssignals das zweite Ausgangssignal von der Auswerteeinheit zum Detektieren des Lichtbogens ausgewertet wird. Das erste Ausgangssignal wird von dem ersten Verstärker, welcher im Bezug auf den zweiten Verstärker einen niedrigeren Verstärkungsfaktor aufweist, an dessen Ausgang erzeugt. Falls bei dem ersten Ausgangssignal ein unterer Grenzwert unterschritten wird, ist eine höhere Messgenauigkeit für eine zuverlässige Detektion eines Lichtbogens erforderlich. Infolge der Unterschreitung des Grenzwerts wird das zweite Ausgangssignal, welches von dem zweiten Verstärker, der in Bezug auf den ersten Verstärker eine höhere Verstärkung aufweist, ausgewertet. Somit kann das Signal des Lichtbogens mit einer hohen Messgenauigkeit detektiert werden.

Ebenso kann vorgesehen sein, dass die Schaltungsanordnung mehr als zwei Verstärker aufweist. In diesem Fall würden mehrere Messbereiche zur Verfügung stehen und somit könnte gegebenenfalls die Detektion des Lichtbogens noch zuverlässiger und genauer erfolgen.

In weiterer Ausgestaltung der Erfindung ist es dabei vorgesehen, dass der erste Stromkreis mit dem zweiten Stromkreis mittels einer ersten Wicklung im ersten Stromkreis und einer zweiten Wicklung im zweiten Stromkreis induktiv gekoppelt ist. Hierbei ist vorgesehen, dass die erste Wicklung durch ein Kabel bzw. eine Leitung des ersten Stromkreises realisiert ist, wobei entweder ein Phasenleiter oder der Nullleiter genutzt werden kann. Um das Signal, welches durch den Lichtbogen im ersten Stromkreis erzeugt wird, an den zweiten Stromkreis mittels induktiver Kopplung zu übertragen, muss im zweiten Stromkreis eine entsprechende Sekundärwicklung und ein entsprechender Wandlerkern der Wicklung vorgesehen werden. Hierbei sollte die Sekundärwicklung und gegebenenfalls eine zusätzliche Bürde im zweiten Stromkreis derart ausgelegt werden, dass der Wandlerkern nicht frühzeitig in seinen Sättigungsbereich gelangt und somit über den gesamten Messbereich linear betrieben werden kann. Ebenso ist es aber auch denkbar, dass der erste Stromkreis mit dem zweiten Stromkreis optisch, beispielsweise mittels eines Optokopplers, gekoppelt ist. Durch die Kopplung ist der erste Stromkreis von dem zweiten Stromkreis galvanisch getrennt. Dies hat einerseits den Vorteil, dass die entsprechenden Bauteile der Schaltungsanordnung, welche sich in dem zweiten Stromkreis befinden, nicht durch die hohen Amplituden der Stromstärke bzw. der Spannung, welche in dem ersten Stromkreis in Folge eines Lichtbogens auftreten können, geschützt sind. Andererseits kann die Schaltungsanordnung somit einfach an einer beliebigen Position des ersten Stromkreises angeordnet werden.

Eine weitere Ausgestaltungsform der Erfindung sieht dabei vor, dass der erste Stromkreis Teil der Schaltungsanordnung ist. Hier ist es ebenso vorgesehen, dass die Schaltungsanordnung direkt in dem ersten Stromkreis angeordnet ist und sich nicht in einem zweiten Stromkreis befindet, welcher mit dem ersten Stromkreis gekoppelt ist.

Dabei hat es sich als weiterhin vorteilhaft gezeigt, dass die Auswerteeinheit für jedes der Ausgangssignale einen Analog-Digital-Wandler umfasst. Durch diese Analog-Digital-Wandler werden die analogen Ausgangssignale der jeweiligen Verstärker in digitale Werte umgewandelt. Hierbei muss die jeweilige Auflösung des Analog-Digital-Wandlers derart gewählt werden, dass das entsprechende Ausgangssignal mit einer hohen Messgenauigkeit erfasst werden kann und dass durch Nebeneffekte, wie sie z. B. durch Rauschen oder Messungenauigkeiten auftreten können, das Messergebnis nicht verfälscht wird. Ebenso sollte die entsprechenden Analog-Digital-Wandler eine ausreichend hohe zeitliche Auflösung garantieren. Die Abtastrate der Analog-Digital-Wandler sollte derart gewählt werden, dass das Signal des Lichtbogens mit einer ausreichend hohen zeitlichen Auflösung erfasst werden kann, um einen Lichtbogen zuverlässig detektieren zu können.

Eine weitere Ausführungsform der Erfindung sieht dabei vor, dass mittels der Auswerteeinheit ein Schutzschalter angesteuert ist. Nachdem ein Lichtbogen mittels der Schaltungsanordnung bzw. der Auswerteeinheit detektiert wurde, kann ein entsprechender Schutzschalter angesteuert werden, welcher den ersten Stromkreis trennt. Somit können die Beschädigungen, die aufgrund eines Lichtbogens entstehen würden, verhindert bzw. zumindest verringert werden.

In weiterer Ausgestaltung der Erfindung ist es dabei vorgesehen, dass der zweite Stromkreis ein Element zur Anpassung des Offsets der Stromstärke des Signals umfasst. Durch dieses Element kann zu dem Signal, welches von dem ersten Stromkreis an den zweiten Stromkreis übertragen wird, ein beliebiger Offset hinzuaddiert bzw. abgezogen werden. Somit kann beispielsweise erreicht werden, dass das Signal nur positive Werte annimmt. Somit müssen die jeweiligen Verstärker nur dafür ausgelegt sein, positive Signale zu verstärken. Aus diesem Grund kann die Schaltung einfacher aufgebaut werden und somit kostengünstiger realisiert werden. Das Element zur Anpassung des Offsets des Signals kann beispielsweise mittels einer einstellbaren Strom- oder Spannungsquelle realisiert werden.

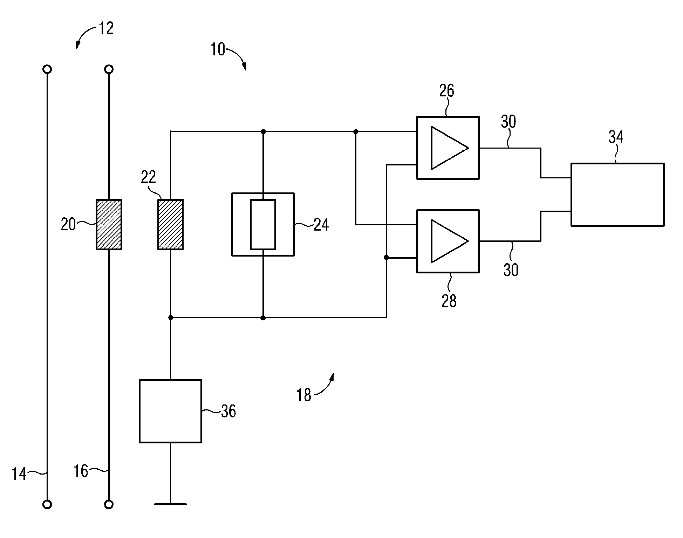

Die vorstehend im Zusammenhang der erfindungsgemäßen Schaltungsanordnung genannten Vorteile gelten in ebensolcher Weise für das Verfahren zum Detektieren eines Lichtbogens gemäß Patentanspruch 9. Dieses Verfahren bezieht sich auf die Schaltungsanordnung zum Detektieren eines Lichtbogens. Weitere Vorteile, Merkmale und Einzelheiten der Erfindung ergeben sich aus der nachfolgenden Beschreibung bevorzugter Ausführungsbeispiele sowie anhand der Zeichnung.

Die einzige Zeichnung zeigt dabei einen Schaltplan der Schaltungsanordnung zum Detektieren eines Lichtbogens.

In der Figur ist eine Schaltungsanordnung 10 zum Detektieren eines Lichtbogens in einem ersten Stromkreis 12 dargestellt. Der erste Stromkreis 12, insbesondere ein Wechselspannungsnetz, ist hier beispielhaft durch zwei Leitungen 14 und 16 dargestellt, wobei eine der Leitungen 14, 16 dem Nullleiter und die andere Leitung 14, 16 der Phasenleiter entspricht. Die Anordnung des Phasenleiters bzw. des Nullleiters ist in diesem Fall beliebig. Der erste Stromkreis 12 ist in diesem Ausführungsbeispiel einphasig dargestellt. Die Schaltungsanordnung 10 kann aber ebenso für dreiphasig angeordnete Stromkreise genutzt werden.

An den ersten Stromkreis 12 ist ein zweiter Stromkreis 18 gekoppelt. Diese Kopplung kann beispielsweise induktiv mittels einer ersten Wicklung 20 bzw. Primärwicklung im ersten Stromkreis 12 und einer entsprechenden zweiten Wicklung 22 bzw. Sekundärwicklung im zweiten Stromkreis 18 erfolgen. Ebenso ist auch jede andere Form der Kopplung, wie beispielsweise eine optische Kopplung oder dergleichen, zwischen dem ersten Stromkreis 12 und dem zweiten Stromkreis 18 vorgesehen. Durch diese Kopplung wird durch einen Lichtbogen in dem ersten Stromkreis in dem zweiten Stromkreis ein Signal erzeugt.

In dem hier dargestellten Ausführungsbeispiel ist der erste Stromkreis 12 mit dem zweiten Stromkreis 18 induktiv gekoppelt. Durch diese Kopplung entsteht in dem zweiten Stromkreis 18 eine induzierte Spannung, welche an einer Bürde 24 anliegt. Die elektrische Spannung wird mittels eines ersten Verstärkers 26 und eines zweiten Verstärkers 28 verstärkt, wobei die beiden Verstärker 26, 28 parallel zueinander angeordnet sind. Somit entsteht am Ausgang 30 des ersten Verstärkers 26 ein erstes Ausgangssignal und am Ausgang 32 des zweiten Verstärkers 28 ein zweites Ausgangssignal. Die beiden Ausgangssignale, welche an den entsprechenden Ausgängen 30, 32 der Verstärker 26, 28 anliegen, werden mittels einer Auswerteeinheit 34 ausgewertet.

In dem hier dargestellten Ausführungsbeispiel ist es vorgesehen, dass der erste Verstärker 26 einen ersten Verstärkungsfaktor aufweist und der zweite Verstärker 28 einen zweiten Verstärkungsfaktor aufweist, wobei der zweite Verstärkungsfaktor einen höheren Verstärkungsfaktor aufweist als der erste. Die Anordnung der jeweiligen Verstärker 26, 28 mit ihren jeweiligen Verstärkungsfaktoren ist beispielhaft gewählt, die Anordnung könnte ebenso umgekehrt sein. Ebenso ist es vorgesehen, dass die Schaltungsanordnung 10 mehr als zwei Verstärker umfasst.

Die zweite Wicklung 22 und die Bürde 24 müssen so dimensioniert werden, dass über den gesamten Messbereich ein lineares Signal von dem ersten Stromkreis 12 zu dem zweiten Stromkreis 18 übertragen wird. Es soll verhindert werden, dass durch die Dimensionierung der zweiten Wicklung 22 bzw. der Bürde 24 eine Sättigung des Signals erreicht wird. Der Messbereich umfasst in diesem Beispiel bevorzugt Stromstärken des Lichtbogens im Bereich von 1 A bis zu 400 A.

Durch die parallele Verstärkung des Signals mittels der beiden Verstärker 26, 28 und ihrer entsprechenden Verstärkungsfaktoren wird das Signal in diesem Ausführungsbeispiel in zwei Messbereiche unterteilt. Bei einem Überschreiten eines oberen Grenzwertes des Signals am Ausgang 32 des zweiten Verstärkers 28 wird das Signal am Ausgang 30 des ersten Verstärkers 26 von der Auswerteeinheit 34 ausgewertet. Somit kann je nach Amplitude des Signals der entsprechende Ausgang 30 oder 32 ausgewählt und somit der Lichtbogen über den gesamten Messbereich mit einer hohen Genauigkeit detektiert werden.

Bei dem hier dargestellten Beispiel umfasst die Auswerteeinheit 34 einen Mikrocontroller. Ebenso sollte die Auswerteeinheit 34 für jedes Ausgangssignal, das an den Ausgängen 30 bzw. 32 der jeweiligen Verstärker 26 bzw. 28 anliegt, einen Analog-Digital-Wandler umfassen. Die jeweiligen Analog-Digital-Wandler müssen die entsprechende Auflösung des Messbereichs sowie des zeitlichen Verlaufs des Signals garantieren. Ein Lichtbogen kann anhand des zeitlichen Verlaufs des Signals, insbesondere des zeitlichen Verlaufs der Stromstärke in dem ersten Stromkreis 12, welcher in dem zweiten Stromkreis 18 ein Signal erzeugt, detektiert werden. Als Kriterium für einen Lichtbogen kann einerseits die zeitliche Dauer, für die die Stromstärke nach dem Erreichen des Nulldurchgangs bzw. vor dem Erreichen des Nulldurchgangs auf dem Wert Null bleibt, genutzt werden. Eine andere Möglichkeit besteht darin, die Flankensteilheit des zeitlichen Verlaufs der Stromstärke als Kriterium für das Vorhandensein eines Lichtbogens zu nutzen.

Nachdem ein Lichtbogen mit der Schaltungsanordnung 10 detektiert wurde, kann ein hier nicht dargestellter Schutzschalter mittels der Auswerteeinheit 34 angesteuert werden und somit der erste Stromkreis 12 getrennt werden. Somit können Beschädigungen der Leitungen 14, 16, welche infolge des Lichtbogens entstehen könnten, verhindert bzw. zumindest verringert werden. Weitere Folgeschäden wie beispielsweise ein Brand, der infolge der hohen thermischen Belastung entstehen könnte, können somit auch verhindert werden.

Ebenso ist es vorgesehen, dass der zweite Stromkreis 18 ein Element 36 zur Anpassung des Offsets des Signals umfasst. Somit kann zu dem Signal ein beliebiger Offset hinzuaddiert werden. Durch das Element 36 kann beispielsweise erreicht werden, dass das Signal nur positive Werte annimmt. Somit können die beiden Verstärker 26 und 28 so ausgelegt werden, dass sie nur positive Signale verstärken können. Folglich kann die Schaltungsanordnung 10 einfacher und daher kostengünstiger gestaltet werden. In dem dargestellten Ausführungsbeispiel kann die elektrische Spannung, welche an der Bürde 24 anliegt, um einen beliebigen Offset verschoben werden. Das Element 36 kann in diesem Fall beispielsweise durch eine entsprechende Spannungsquelle realisiert werden.

### Bezugszeichenliste

- 10: Schaltungsanordnung
- 12: Stromkreis
- 14: Leitung
- 16: Leitung
- 18: Stromkreis
- 20: Wicklung
- 22: Wicklung
- 24: Bürde
- 26: Verstärker
- 28: Verstärker
- 30: Ausgang
- 32: Ausgang
- 34: Auswerteeinheit
- 36: Element

## Patentansprüche

1. Schaltungsanordnung (10) zum Detektieren eines Lichtbogens in einem ersten Stromkreis (12) mit
- einem zweiten Stromkreis (18), der an den ersten Stromkreis (12) koppelbar ist, so dass durch den Lichtbogen in den zweiten Stromkreis (18) ein Signal erzeugbar ist,
- einem ersten Verstärker (26) in dem zweiten Stromkreis (18), wobei der ersten Verstärker (26) einen ersten Verstärkungsfaktor aufweist,
- mindestens einem zweiten Verstärker (28) in dem zweiten Stromkreis (18), wobei der zweite Verstärker (28) einen gegenüber dem ersten höheren, zweiten Verstärkungsfaktor aufweist und parallel zu dem ersten Verstärker (26) angeordnet ist, so dass das Signal mittels des ersten und des zweiten Verstärkers (26, 28) verstärkbar ist,
- einer Auswerteeinheit (34) in dem zweiten Stromkreis (18) zur Auswertung eines ersten Ausgangssignals des ersten Verstärkers (26) und eines zweiten Ausgangssignals des zweiten Verstärkers (28), wobei
- bei Überschreiten eines oberen Grenzwerts der Stromstärke des zweiten Ausgangssignals das erste Ausgangssignal von der Auswerteeinheit (34) zum Detektieren des Lichtbogens ausgewertet wird.

2. Schaltungsanordnung (10) nach Anspruch 1, **dadurch gekennzeichnet, dass** der Lichtbogen durch den zeitlichen Verlauf der Stromstärke des ersten Ausgangssignals und/oder des zweiten Ausgangssignals mittels der Auswerteeinheit (34) nachweisbar ist.

3. Schaltungsanordnung (10) nach Anspruch 1 oder 2, **dadurch gekennzeichnet, dass** bei Unterschreiten eines unteren Grenzwerts der Stromstärke des ersten Ausgangssignals das zweite Ausgangssignal von der Auswerteeinheit (34) zum Detektieren des Lichtbogens ausgewertet wird.

4. Schaltungsanordnung (10) nach einem der Ansprüche 1 bis 3, **dadurch gekennzeichnet, dass** der erste Stromkreis mit dem zweiten Stromkreis (12) mittels einer ersten Wicklung (20) im ersten Stromkreis (12) und einer zweiten Wicklung (22) im zweiten Stromkreis (18) induktiv gekoppelt ist.

5. Schaltungsanordnung (10) nach einem der Ansprüche 1 bis 4 **dadurch gekennzeichnet, dass** der erste Stromkreis (12) Teil der Schaltungsanordnung (10) ist.

6. Schaltungsanordnung (10) nach einem der vorhergehenden Ansprüche, **dadurch gekennzeichnet, dass** die Auswerteeinheit (34) für jedes der Ausgangssignale einen Analog-Digital-Wandler umfasst.

7. Schaltungsanordnung (10) nach einem der vorhergehenden Ansprüche, **dadurch gekennzeichnet, dass** mittels der Auswerteeinheit (34) ein Schutzschalter angesteuert ist.

8. Schaltungsanordnung (10) nach einem der vorhergehenden Ansprüche, **dadurch gekennzeichnet, dass** der zweite Stromkreis (18) ein Element (36) zur Anpassung des Offsets der Stromstärke des Signals umfasst.

9. Verfahren zum Detektieren eines Lichtbogens in einem ersten Stromkreis (12) durch
- einen zweiten Stromkreis (18), der an den ersten Stromkreis (12) gekoppelt ist, so dass durch den Lichtbogen in den zweiten Stromkreis (18) ein Signal erzeugt wird,
- das Signal in dem zweiten Stromkreis (18) mit einen ersten Verstärkungsfaktor verstärkt wird,
- das Signal in dem zweiten Stromkreis (18) parallel mit mindestens einen gegenüber dem ersten höheren, zweiten Verstärkungsfaktor verstärkt wird,
- in dem zweiten Stromkreis (18) zur Auswertung eines ersten Ausgangssignals, das durch die erste Verstärkung des Signals gebildet wird, und eines zweiten Ausgangssignals, das durch die zweite Verstärkung des Signals gebildet wird, wobei
bei Überschreiten eines oberen Grenzwerts der Stromstärke des zweiten Ausgangssignals das erste Ausgangssignal von der Auswerteeinrichtung (34) zum Detektieren des Lichtbogens ausgewertet wird.
